# EUROPEAN PATENT APPLICATION

(11) **EP 1 130 548 A2**
(43) Date of publication of application: **05.09.2001**
(21) Application number: 01104457.5
(22) Date of filing: 28.02.2001
(51) Int. Cl.: G06T 15/70

(54) **Character display method**

(30) Priority: 29.02.2000 JP 2000054939; 14.02.2001 JP 2001037261
(71) Applicant: Sony Computer Entertainment Inc., Tokyo 107-0052 (JP)
(72) Inventor: Yonezawa, Toshiaki,c/o ALVION LTD., Suiota-shi, Osaka 564-0052 (JP)
(74) Representative: MÜLLER & HOFFMANN Patentanwälte

(57) **Abstract**

To smoothly the facial expressions of a character from a first facial expression to a second facial expression, an entertainment system executes the following processing. Reading the image data of the first facial expression in which plural control points are set, the image data of the second facial expression in which plural control points are set, and the image data of a third facial expression. Setting the same number of control points as those of the image data of the first facial expression to the image data of the third facial expression, generating a sequence of image data of inbetween facial expressions between the image data of the first facial expression and the image data of the third facial expression on the basis of the control points of the image data of the first facial expression and the control points of the image data of the third facial expression (first morphing). Setting the same number of control points as those of the image data of the second facial expression to the image data of the third facial expression, and generating a sequence of inbetween image data of facial expressions between the image data of the third facial expression and the image data of the second facial expression on the basis of the control points of the image data of the third facial expression and the control points of the image data of the second facial expression (second morphing).

## Description

This application is based on Japanese Patent Application No. 2000-54939 filed on February 29, 2000, and No.2001-037261 filed on February 14, 2001 the entire contents of which are incorporated herein by reference for all purposes.

### BACKGROUND OF THE INVENTION

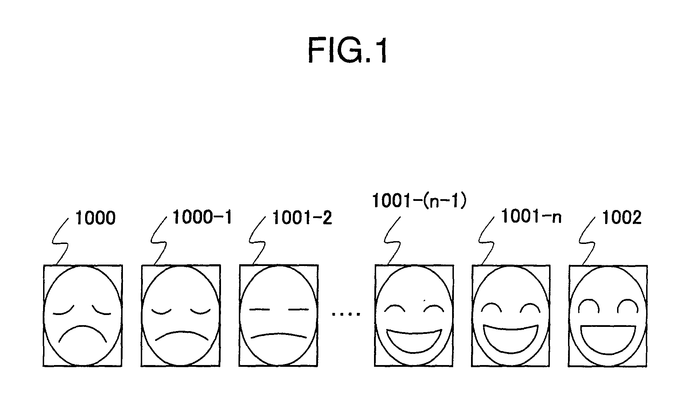

Among video games in which the behaviors (actions) of characters displayed on a game screen can be controlled by a game player, there are games in which a game story progresses in accordance with a rule such as a predetermined scenario or the like. In such a video game, various characters appear as well as the characters to be controlled by the game player. Facial expressions of these characters are generally varied in accordance with the progress of the video game. Therefore, the image data of various facial expressions are prepared for each character. For example, in order to vary the facial expression of some character from a tearful face to a smiling face as shown in Fig. 1, not only the image data 1000 of the tearful face and the image data 1002 of the smiling face, but also plural intermediate image data 1001-1 to 1001-n expressing various transient faces in the shift process from the tearful face to the smiling face are prepared in advance. If the facial expression of the character concerned is further varied to another facial expression, the image data of another facial expression and also the plural intermediate image data expressing transient faces in the shift process to another facial expression has to be further prepared in advance . By successively displaying such a series of image data, the character looks to the game player as if the facial expression of the character on the game screen is varied.

For example, if the series of the image data shown in Fig. 1 are successively displayed in the following order: the tearful face image data 1000 → the intermediate image data 1001-1 → the intermediate image data 1001-2 → ... → the intermediate image data 1001-(n-1) → the intermediate image data 1001-n → the smiling face image data 1002, the facial expression of the character on the game screen looks to the game player as if it is varied from the tearful face to the smiling face. Here, in order to make the variation of the facial expression of the character on the game screen look smoother, the number of the intermediate image data 1001-1 to 1001-n of the transient facial expressions under the shift process has to be increased.

### SUMMARY OF THE INVENTION

An object of the present invention is to enable the facial expression of any character on the display screen to smoothly vary into various facial expressions without preparing the image data of a large number of the facial expressions.

In order to attain the object, there is provided a program for making a program-executable system execute processing of varying the facial expression of a character displayed on a display screen from a first facial expression to a second facial expression, the processing to be executed by the system on the basis of the program comprises : processing of reading the image data of the first facial expression in which plural control points are set, the image data of the second facial expression in which plural control points are set and the image data of a third facial expression used when the facial expression of the character is varied; first setting processing of setting control points having the same number as those of the image data of the first facial expression to the image data of the third facial expression; a first morphing processing of generating image data of a sequence of facial expressions which appear between the image data of the first facial expression and the image data of the third facial expression, on the basis of the control points of the image data of the first facial expression and the control points of the image data of the third facial expression after execution of the first setting processing; second setting processing of newly setting control points having the same number as those of the image data of the second facial expression to the image data of the third facial expression after execution of the first morphing processing; and second morphing processing of generating image data of a sequence of facial expressions which appear between the image data of the third facial expression and the image data of the second facial expression, on the basis of the control points of the image data of the third facial expression and the control points of the image data of the second facial expression after executing of the second setting step.

### BRIEF DESCRIPTION OF THE DRAWINGS

Fig. 1 is a conceptual diagram showing a series of image data required to vary the facial expression of a character in the related art;
Fig. 2 is a functional block diagram showing an entertainment system according to an embodiment of the present invention;
Fig. 3 is a conceptual diagram showing information stored in storage means of Fig. 2;
Fig. 4 is a conceptual diagram showing a data structure of information stored in a facial expression file of Fig. 3;
Fig. 5 is a conceptual diagram showing the image data of a facial expression of a character in which a control point group is set;
Fig. 6 is a conceptual diagram showing the image data of another facial expression of the character in which a control point group is set;
Fig. 7 is a conceptual diagram showing the image data of another facial expression of the character in which a control point group is set;
Fig. 8 is a diagram for showing two-step morphing processing according to the embodiment of the present invention;
Fig. 9 is a diagram for sowing the two-step morphing processing according to the embodiment of the present invention;
Fig. 10 is a conceptual diagram showing a data structure of a table required for a video game according to the embodiment of the present invention;
Fig. 11 is a conceptual diagram showing the data structure of another table required to the video game according to the embodiment of the present invention;
Fig. 12 is a flowchart showing processing to be executed by the entertainment system while playing the video game according to the embodiment of the present invention;
Fig . 13 is an external view of the entertainment apparatus according to the embodiment of the present invention, and its peripheral devices; and
Fig. 14 is a schematic diagram showing a hardware construction of the entertainment system according to the embodiment of the present invention.

### DESCRIPTION OF THE PREFERRED EMBODIMENTS

Preferred embodiments according to the present invention will be described with reference to the accompanying drawings .

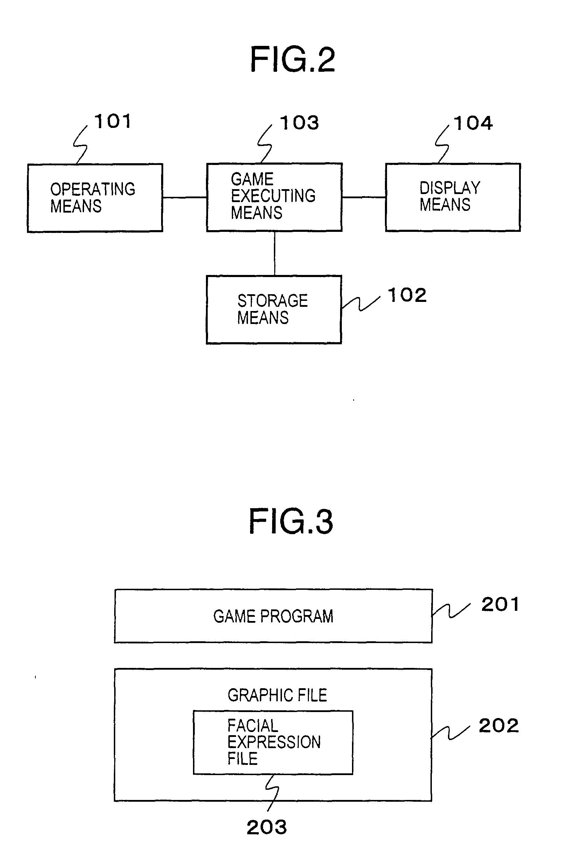

Fig. 2 shows the main part of a functional structure implemented by an entertainment system etc. according to the present invention.

In Fig. 2, reference numeral 101 represents operating means for receiving various instructions , etc. of a game player, reference numeral 102 represents storage means for storing a game program, data for the game, etc., reference numeral 103 represents game executing means for executing the game program loaded from the storage means 102, and reference numeral 104 represents display means for displaying an image in accordance with an instruction of the game executing means 103.

When the game player inputs various instructions, etc. into the operating means 101, the operation information corresponding to the operation content of the game player is transmitted from the operating means 101 to the game executing means 103. The game executing means 103 carries out the progress processing of the game on the basis of the game program, the data for the game loaded from the storage means 102, and the operation information from the operating means 101, and also it generates an image to be displayed as a game scene and controls the display means 104 to display the image.

Here, the game executing means 103 may be implemented by hardware such as CPU (Central Processing Unit), GPU (Graphic Processing Unit), a memory, or the like. The storage means 102 may be implemented by hardware such as CD-ROM (Compact Disk-Read Only Memory), a hard disc, DVD (Digital Video Disk) or the like. The operating means 101 may be implemented by a controller having various operating tools such as buttons, etc., or the like. The display means 104 may be implemented by a monitor device using CRT (Cathode Ray Tube) or the like, a television device or the like. The detailed construction of the-above described hardware will be described later.

In this embodiment, the display means 104 is implemented by the device which is separated from the body of the entertainment apparatus, however, the device implementing the display means 104 may be integrated with the body of the entertainment apparatus. For example, in accordance with the using style of the entertainment system, for the domestic purpose or the business purpose or the like, it is determined whether the device constituting the display means 104 should be integrated with the body of the entertainment apparatus or not.

In this embodiment, the facial expression of the character can be smoothly varied without preparing the image data of a large number of facial expressions. For this purpose, the game executing means 103 varies the facial expression of the character by using the morphing technique in this embodiment. According to the morphing technique, two image data are set as the first and last frames respectively, and then plural frames that appear during the variation from the first frame to the last frame are generated by data processing. Therefore, animated image data of scenes in which one of the two frames is varied to another frame is obtained by using the morphing technique. In this embodiment, in order to support variation to any facial expression, the variation of the facial expression of the character is divided into two steps, and the morphing processing is carried out in each step. This processing will be described in detail hereunder.

As shown in Fig. 3, a game program 201 and a graphic file group 202 are stored in the storage means 102.

Image data of characters, backgrounds, etc. are stored in the graphic file group 202. The graphic file group 202 is loaded and referred to by the game executing means 103. When a display object and its display position are determined, the game executing means 103 refers to the graphic file group 202 to generate a game scene, and controls the display means 104 to display the game scene.

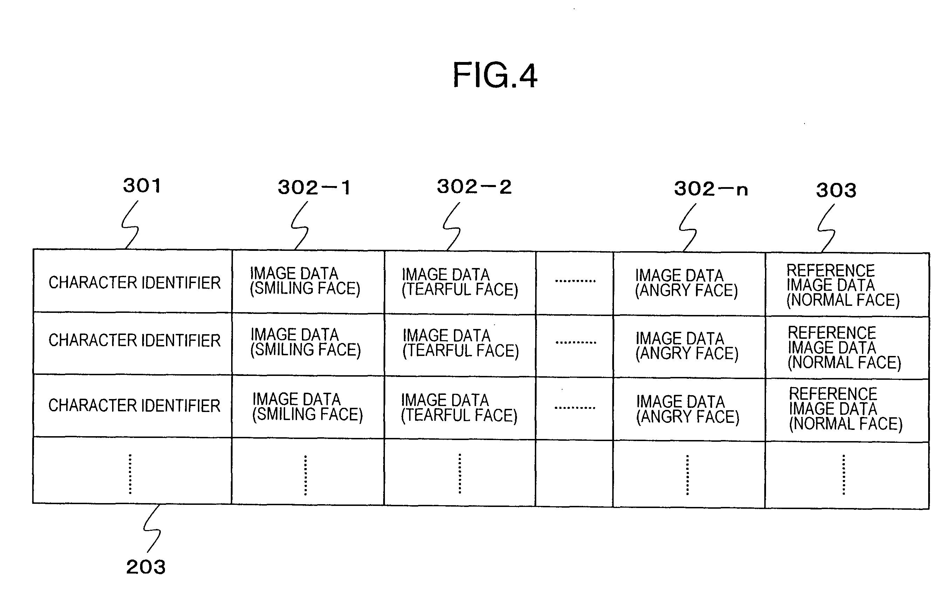

The graphic file group 202 as described above contains a file 203 in which image data of plural kinds of facial expressions of characters appearing on the stage of the video game are stored. This file 203 will be referred to as "facial expression file" . As shown in Fig. 4, in the facial expression file 203 are stored the image data 302-1 to 302-n of plural kinds of facial expressions of the characters such as the image data of a smiling face, the image data of a tearful face, the image data of an angry face, etc. for every character identifier 301. Further, the image data 303 of facial expressions, which are used as references when the facial expression of a character is varied, are further stored in the facial expression file 203 for every character identifier 301. This image data 303 will be described hereunder referred to as "reference image data".

The processing of this embodiment is characterized in that the game executing means 103 refers to the facial expression file 203 to vary the facial expressions of the characters. This processing will be described hereunder by giving an example of a case where the facial expression of a character is varied from a tearful face to a smiling face.

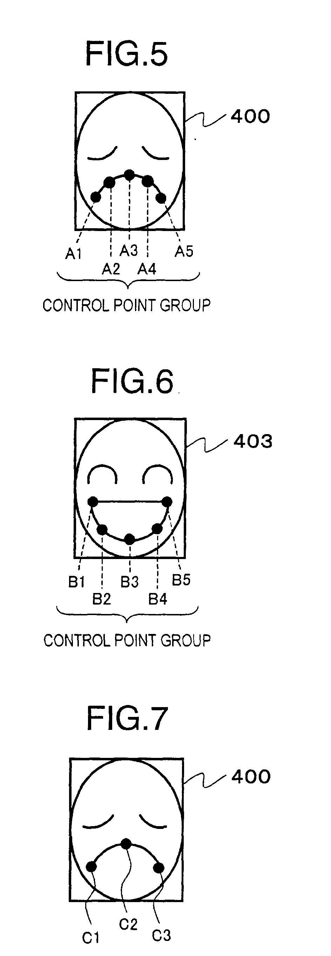

In order to vary the facial expression of the character from the tearful face to the smiling face by using the convensional morphing technique, only the image data of the tearful face and the smiling face are prepared as an anchor object and target object in advance, and the control points A1, A2, A3, ... , B1, B2, B3, .. are set to the features (for example, edge of eyes or mouth, etc.) on the images 400, 403 expressed by the respective image data as shown in Figs. 5 and 6. Here, each control point A1, A2, A3, ... set to the image 400 of the tearful face is associated with any one of the control points set to the image 403 of the smiling face. Specifically, the control point A1 and the control point B1 are associated with each other, the control point A2 and the control point B2 are associated with each other, the control point A3 and the control point B3 are associated with each other, and the control point A4 and the control point B4 are associated with each other. The intermediate points are continuously generated by interpolating the positions between the control points A1, A2, A3, .. of the tearful face image 400 and the corresponding control points B1, B2, B3, ... of the smiling face image 403 (inbetween interpolation) to obtain a sequence of inbetween image data from the tearful face 400 to the smiling face 403. The displacement of each of pixels which do not correspond to the control points is calculated by averaging the displacements of the plural control points near to the pixel concerned.

By displaying inbetween image data every time the inbetween image data are obtained by the inbetween interpolation as described above, the facial expression of the character can be varied from the tearful face to the smiling face. The inbetween interpolation is carried out at a predetermined number of times .

When the facial expression of the character is varied from the tearful face to the smiling face by the conventional morphing technique as described above, nothing is needed except that only the anchor object and the target object are prepared in advance, and thus it is not required to beforehand prepare the inbetween image data in the process of metamorphosis of the anchor object into the target object.

However, when the conventional morphing technique is merely used, it is required to equalize the numbers of the control points on the images of the respective facial expressions before and after the variation of the facial expression. Because, the morphing processing cannot be carried out, if the control points on the image data before the variation are not associated with the control points on the image data after the variation in one-to-one correspondence. Therefore, in order to support various variations of the facial expressions of characters, it is required that the same number of control points as the features on the image data expressing the most complicated shape in the image data prepared in advance (the tearful face image data, the smiling face image data, etc. ) are set to another image data expressing a simple shape. For example, when the features on the smiling face image 403 are specified with the five control points A1, A2, A3, .. as shown in Fig. 6, even if three control points C1 C2, C3 is sufficient to specify the features on the tearful face image 400 having fewer features than that of smiling face image as shown in Fig. 7, five control points B1, B2, B3, ... whose number is equal to the number of the control points A1, A2, A3, ... on the smiling face image 403 need to be set to the tearful face image 400 as shown in Fig. 5 in order to carry out the morphing processing.

If the conventional morphing processing is merely used as described above, attention needs to be paid to the setting of the control point group at the stage that the image data are prepared. On the other hand, according to the processing of this embodiment, the control points can be set to each image data with paying no attention to the number of control points on the other image data at the stage that the image data used for the morphing processing are prepared. That is, according to this embodiment, the control points can be set in association with the features on an image represented by each image data. This is implemented by storing the reference image data 303 in a facial expression data table 203 and executing the two-step morphing processing with the reference image data 303, as described below.

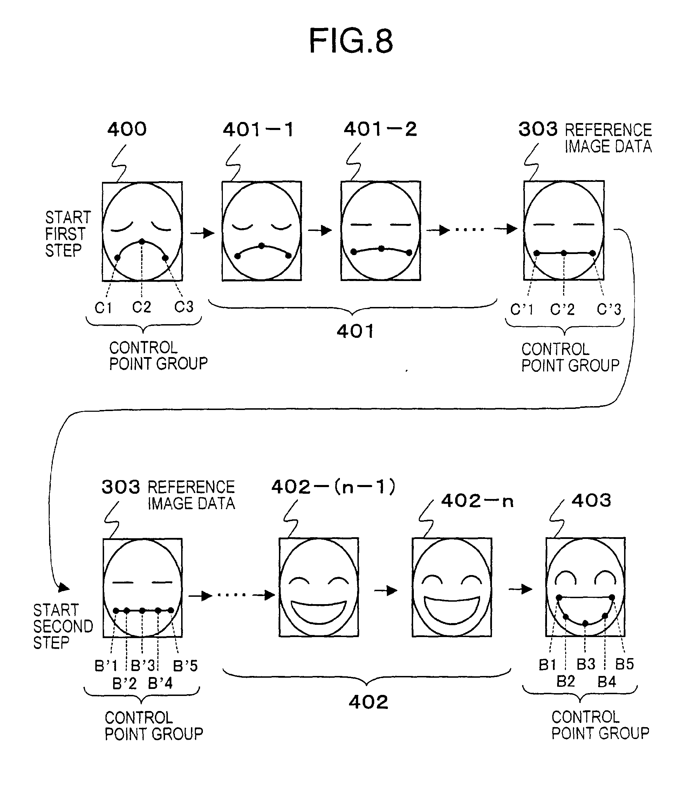

For example, when the facial expression of a character is varied from the tearful face image 400, whose features are specified with the three control points C1, C2, C3, to the smiling face image 403, whose features are specified with the five control points B1, B2, B3, B4, B5 as shown in Fig. 8, the game executing means 103 first sets the first tearful face image data 400 and the reference image data 303 as the anchor object and the target object respectively, and obtains a sequence of inbetween frames from the anchor object to the target object, through the first-step morphing processing. Specifically, the control points C'1, C'2, C'3 whose number is equal to that of the control points C1, C2, C3 on the tearful face image 400 before the variation (deformation) are set to the reference image 303, and then the intermediate points between the control points C1, C2, C3 on the tearful face image 400 and the corresponding control points C'1, C'2, C'3 onf the reference image 303 are continuously generated by executing the inbetween interpolation at a predetermined number of times. Further, the displacement of each pixel which does not correspond to any control point is calculated by averaging the displacements of the plural control points located near to the pixel. Through this processing, a sequence of inbetween image data 401 (401-1, 401-2, ...) from the tearful face 400 to the reference image 303 can be obtained.

Next, in the second-step morphing processing, the game executing means 103 sets the reference image data 303 and the smiling face image data 403 as the anchor object and the target object, and obtains a sequence of inbetween frames from the anchor object to the target object. Specifically, the control points B'1, B'2, B'3, B'4, B'5 whose number is equal to that of the control points B1, B2, B3, B4, B5 on the smiling face image 403 after the variation (deformation) are set to the reference image 303, and then the intermediate points between the control points B'1, B'2, B'3, B'4, B'5 of the reference image 303 and the corresponding control points B1, B2, B3, B4, B5 of the smiling face image 403 are continuously generated by executing the inbetween interpolation at a predetermined number of times. Further, the displacement of each pixel which does not correspond to any control point is calculated by averaging the displacements of the plural control points located near to the pixel. Through this processing, a sequence of inbetween image data 402 (..., 401-(n-1), 401-n) between the reference image 303 and the smiling face 403 can be obtained.

During the execution of the two-step morphing process as described above, every time the game executing means 103 obtains inbetween image data, it displays the inbetween image data, whereby the facial expression of the any character can be finally varied from the tearful face to the smiling face.

As described above, according to the processing of this embodiment, the facial expression of the character can be varied without preparing the inbetween image data between two images in advance. Further, even when the number of control points on image data before and after the variation of the facial expression is different among existing facial expression image data such as smiling face image data, tearful face image data, angry face image data, etc. which are prepared in advance, the facial expression of any character can be smoothly varied from one of the facial expressions to another facial expression. Accordingly, the control points can be set to each image data without paying attention to the number of control points on the other image data.

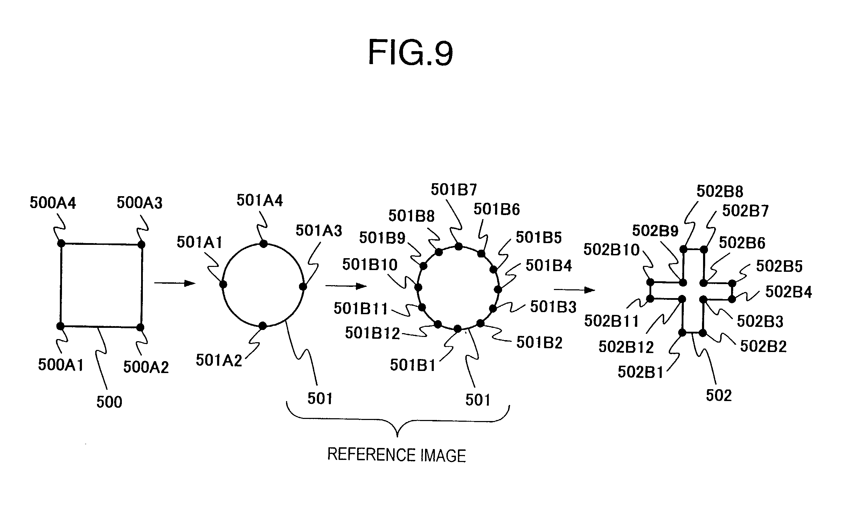

In this embodiment, the present invention is applied to the facial expression variation of the characters in a video game, however, the present invention is not limited to the facial expression variation of the characters in the video game. For example, the present invention may be applied to a case where the shape deformation between two pattern images 500, 502 which are different in number of control points is implemented by the morphing processing as shown in Fig. 9. Like the above case, the two-step morphing processing is executed in this case.

Specifically, first control points 501A1 to 501A4 whose number is equal to that of control points 500A1 to 500A4 of a first pattern image 500 are set to a reference pattern image 501, and then the firs pattern image 500 is varied to the reference pattern image 501 through the first-step morphing processing. With this processing, a sequence of inbetween image data between the first, pattern image 500 and the reference pattern image 501 are generated. Thereafter, control points 501B1 to 501B12 whose number is equal to that of control points 502B1 to 502B12 of the second image pattern 502 are newly set to the reference pattern image 501, and then the reference pattern image 501 is varied to the second pattern image 502 through the second-step morphing processing. With this processing, a sequence of inbetween image data between the reference pattern image 501 and the second pattern image 502 are generated.

Here, the display timing according to this embodiment will be described by citing a case in a specific progress of a game.

There is cited such a video game in which a character (i.e. , player character) , who is an operating object of a game player throws a ball at other characters . This video game adopts such a rule that the facial expression of a character that the ball hit is varied in accordance with the color of the ball. It is needless to say that the following case is an example and thus the video game to which the present invention is applied is not limited to the above video game.

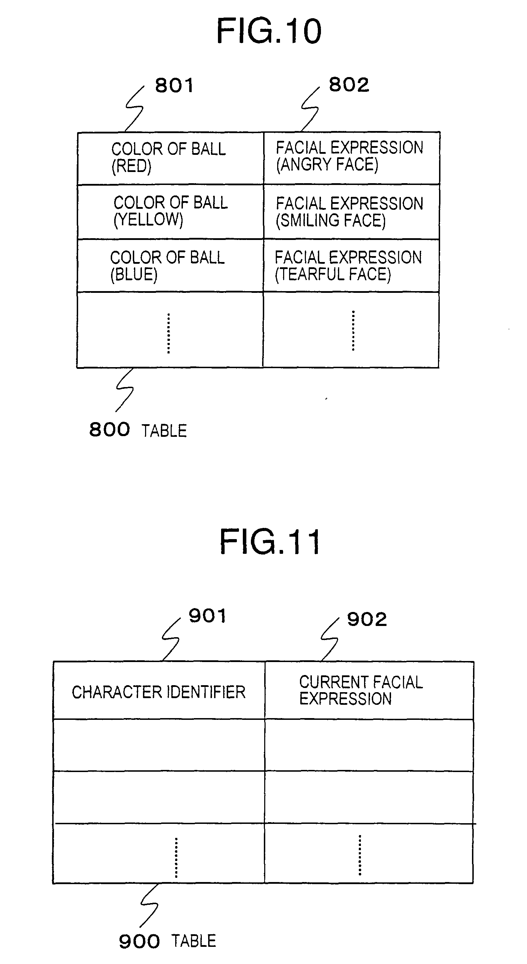

In this example, not only the facial expression file, etc. as described above, but also two tables are required to be stored in the storage means 102. As shown in Fig. 10, each color name 801 of the ball and the name 802 of each facial expression of a character which appears after the ball having the color hit at the character are stored in association with each other in one table 800. Further, as shown in Fig. 11, the identifiers 901 of the characters other than the player character and the names 902 of the current facial expressions of these characters are stored in association with each other in the other table 900.

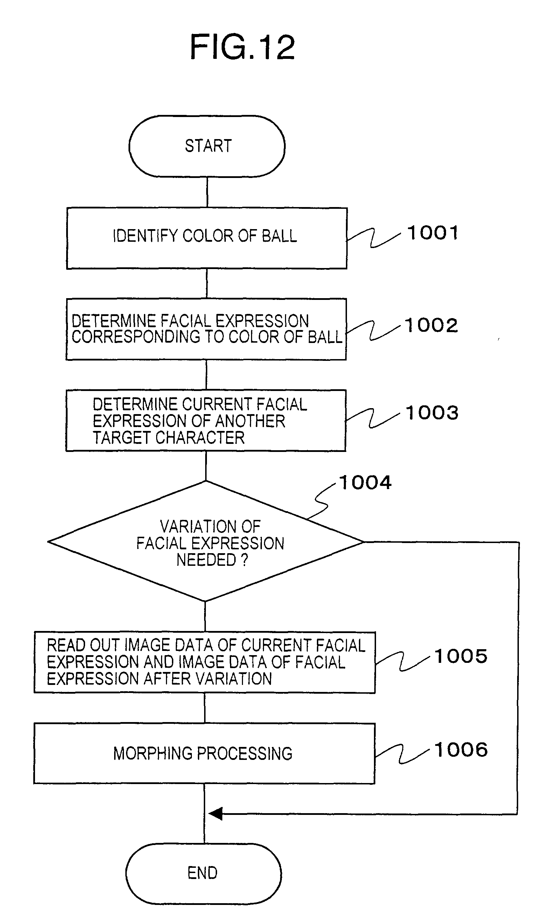

When recognizing that the ball hit a character other than the player character, the game executing means 103 executes the following processing as shown in Fig. 12. That is, the game executing means 103 judges the color of the ball that hit the character (step 1001), and searches the facial expression name associated with the color of the ball from the stored information of the table 800 (step 1002).

Thereafter, the game executing means 103 searches from the stored information of the table 900 the current facial expression name associated with the identifier of the character hit by the ball (step 1003), and compares the facial expression name thus obtained with the facial expression name obtained in the step 1002 (step 1004).

As a result, if the facial expression name obtained in the step 1003 and the facial expression name obtained in the step 1002 are identical to each other, it would be unnecessary to vary the facial expression of the character hit by the ball. Therefor, the game executing means 103 generates a game scene without executing the morphing processing and controls the display means 104 to display the game scene.

On the other hand, if the facial expression name obtained in the step 1003 is different from that obtained in the step 1002, it is necessary to vary the facial expression of the character who was hit by the ball, and thus image data required to execute the second-step morphing processing described with reference to Fig. 8 are read from the facial expression file 203 (step 1005). Specifically, there are read out the image data of the current facial expression name obtained in the step 1003, the image data of the facial expression name obtained in the step 1002 and the reference image data out of the image data associated with the identifier of the character who was hit by the ball. Thereafter, the second-step morphing processing as described with reference to Fig. 8 is executed by using these three image data (step 1006). Specifically, the first-step morphing processing for varying the current facial expression image to the reference image is executed, and then the second-step morphing processing for varying the reference image to the last facial expression image is executed. During the execution of the two-step morphing processing as described above, every time the game executing means 103 obtains inbetween image data by the inbetween interpolation, the game executing means 103 develops a game scene from the inbetween image data, and controls the display means 104 to display the game scene, whereby the facial expression of the character who was hit by the ball is varied in accordance with the color of the ball. The information 902 of the table 900 is renewed on the basis of the current facial expression name of the character.

In the foregoing description, the facial expression of the character who was hit by the ball thrown by the player character is varied. However, an event which provides a timing of varying the facial expression of the character is not necessarily limited to the player's action of throwing a ball to hit some character. For example, it may be other actions such as the contact between the player character and some other object, etc.

Further, in the foregoing description, the variable object in the game is limited to the facial expression of the character. However, the variable object is not necessarily limited to the facial variation of the character as described above. The variable object in the game may be determined in accordance with the game story or the like. For example, when the variable object is a pattern shape, information indicating the current shape of a pattern and information indicating the shape of the pattern after deformation may be stored in the table in advance as in the case that the variable object is the facial expression of a character. In this case, only when the current shape indicated by the information stored in the table at the time when an event providing the start timing of the shape variation of a pattern occurs is different from the shape after the deformation, that is, only when it is necessary to vary the shape of the pattern, the two-step morphing processing can be executed.

Next, a hardware construction of the entertainment system which can implement the functional construction shown in Fig. 2 will be described hereunder.

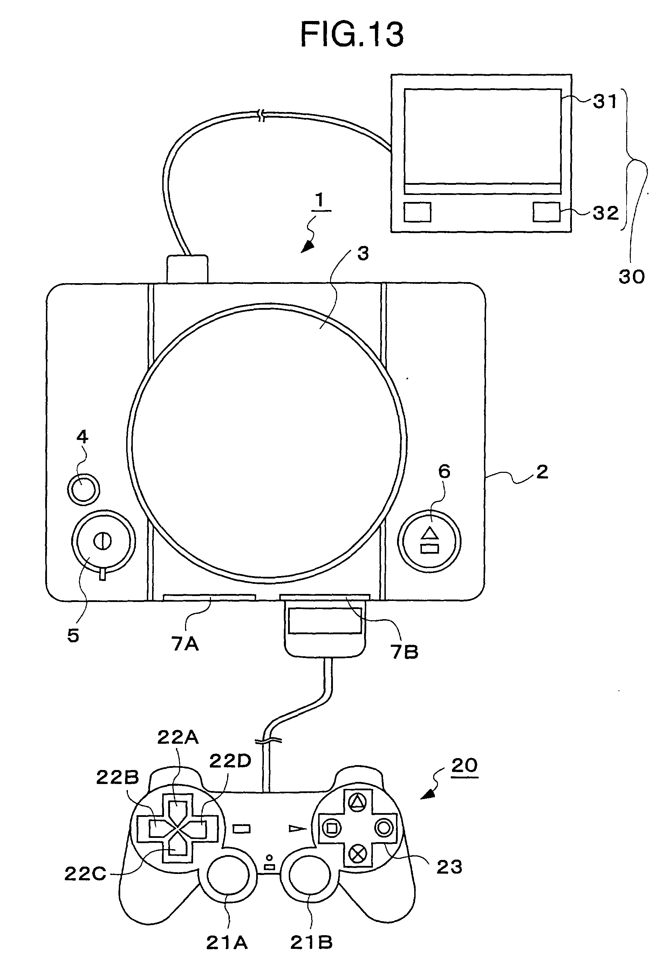

The functional construction shown in Fig. 2 can be implemented by connecting an operating device (controller) 20, a monitor 31 and a speaker 32 to the entertainment apparatus 1 which can execute the programs of video games as shown in Fig. 13. Fig. 13 shows a case where a television set 30 is used as the monitor 31 and the speaker 32.

The entertainment apparatus 1 loads a game program recorded in an optical disc such as CD-ROM or the like and executes the game program in accordance with the operation of a game player. The body 2 of the entertainment apparatus 1 is provided with a disc mount portion 3 in which the optical disc serving as a recording medium having the game program recorded therein is mounted, a reset switch 4 for freely resetting the video game, a power source switch 5, a disc operating switch 6 for operating the mounting of the optical disc, and a slot portion (two slot portions 7A, 7B in this case).

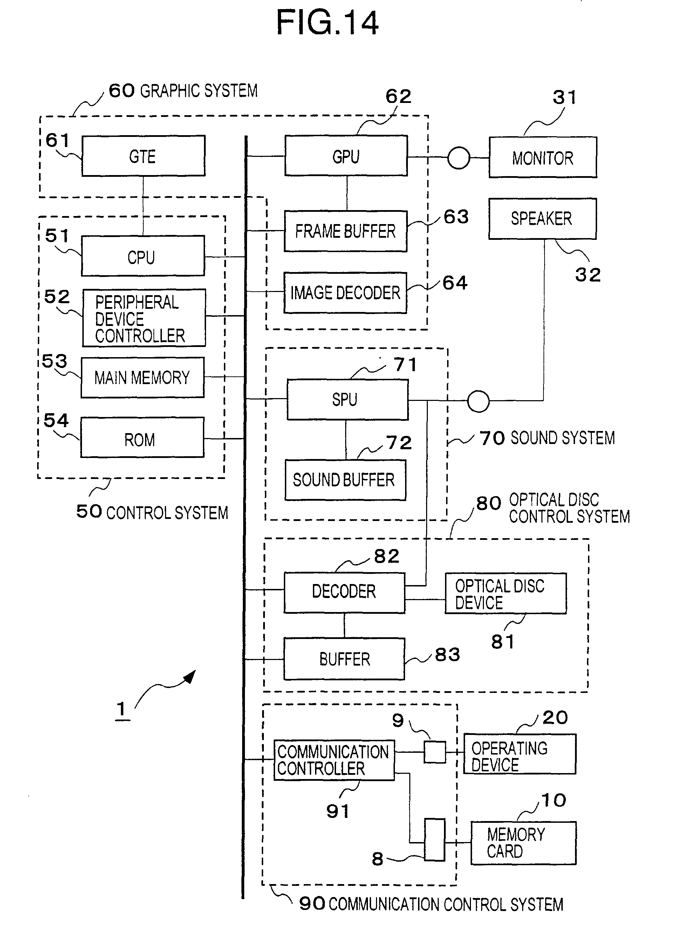

The operating device 20 for accepting an input from a player may be detachably connected to the controller connection portion (9 in Fig. 14) of each slot portion 7A, 7B. Accordingly, if the connectors of the operating devices are mounted in each of two controller connection portions, the game can be played by two players. Further, an auxiliary storage device (memory card device 10 in Fig. 14 or the like) which can load and save game data (setting data, etc. for the game), another portable electronic equipment, etc. may be connected to the memory card connection portion (8 in Fig. 14) of each slot portion 7A, 7B.

The memory card 10 and the portable electronic equipment can be detached from the memory card connection portion 8 under the state that the main body of the apparatus is kept powered on. Accordingly, when the storage capacity of the memory card 10 being connected to the memory card connection portion 8 becomes insufficient or the like, the player can exchange the memory card 10 connected to the memory card connection portion 8 for a new one while the body of the apparatus is kept powered on.

Further, an audio output terminal for the speaker 32, a video output terminal for the monitor 31, etc. are provided to the back side of the entertainment apparatus 1 (not shown).

The hardware construction in the entertainment system is schematically shown in Fig. 14, for example.

In the entertainment apparatus 1 are accommodated a control system 50, a graphic system 60, a sound system 70, an optical disc control system 80, a communication control system 90, parallel I/O interface (not shown) and serial I/O interface (not shown) for connection to other equipments, a bus for mutually connecting these parts , etc . The details of these parts 50, 60, 70, 80 and 90 are as follows.

The control system 50 is equipped with a central processing unit (CPU) 51 for controlling the overall entertainment system, a peripheral device controller 52 for executing various control processing (interruption control processing, control processing of dynamic memory access (DMA) transmission , etc . ) , a main memory 53 comprising a random access memory (RAM), a read only memory (ROM) 54 in which control programs executed by CPU 51 (aso-called operating system program, etc.) are stored, etc.

When the entertainment apparatus 1 is powered on, the CPU 51 loads the operating system from ROM 54 to the main memory 53 and executes the operating system, thereby starting the control of the overall entertainment system such as the graphic system 60, the sound system 70, etc. Further, when starting the operating system, the CPU 51 executes the initial processing such as operation check, etc., and loads an application program from the optical disc in the disc mount portion 3 to the main memory 53 to start the application program thus loaded, whereby the game processing defined by the application program is started. RISC-CPU may be used as the CPU 51.

By executing the game program in CPU 51, the graphic system 60, the sound system 70, etc . are controlled in accordance with the instructions from the game player to control the display of an image, the generation of music sounds, effective sounds, etc.

The peripheral device controller 52 executes not only the interruption control processing, but also dynamic memory access (DMA) transmission processing of directly transmitting data between respective parts (the main memory 53, the GPU 62, an image decoder 64, a decoder 82, etc. ) without passing through CPU 51. Accordingly, the load imposed on the CPU 51 due to the data transmission is lowered, and thus the data transmission speed in a program read-out operation, an image display operation or an image drawing operation can be increased.

Further, the graphic system 60 is equipped with a geometry transfer engine (GTE) 61, a graphic processing unit (GPU) 62, a frame buffer 63, an image decoder 64, a video output terminal, etc.

The GTE 61 executes processing such as a matrix operation, a vector operation, etc. for coordinate transformation in response to a request from the CPU 51. For example, in rendering processing of a three-dimensional space, the GTE 61 carries out the perspective transformation of projecting a three-dimensional object approximately expressed by plural polygons onto a virtual camera screen, that is, the projection transformation of the respective vertexes coordinate of the plural polygons. If the GTE 61 is equipped with a parallel operating mechanism of executing plural operations in parallel, the coordinate transformation, the perspective transformation and the processing of calculating the light source, etc. can be performed at higher speed.

The frame buffer 63 comprises so-called a dual port RAM. That is, the drawing operation of GPU 62 or the data transmission from the main memory 53 can be performed simultaneously with the read-out operation for display. Not only an area for storing image information output as a video output from the monitor 31, but also an area for storing a color lookup table (CLUT) which is accessed by the GPU 62 when the drawing processing is performed is kept in the frame buffer 63.

In response to a command from CPU 51, the GPU 62 performs (1) the processing of the image information into the frame buffer 63 while properly using the GTE 61, (2) the processing of reading out the content of the frame buffer 63, converting the content thus read out to a video signal and then outputting the video signal from the video terminal, etc.

In response to a request from the CPU 51, the image decoder 64 reads image data of a still image, a moving picture or the like from the main memory 53, decodes the image data thus read and then stores the decoded image data into the main memory 53. This reproduced image data are stored in the frame buffer 63 by the GPU 62, and used as a background image.

The sound system 70 is equipped with an SPU (Sound Processing Unit) 71 for generating music sounds, effective sounds, etc. in response to an instruction from the CPU 51, a sound buffer 72 in which waveform data, etc. are stored by SPU 71, an audio output terminal, etc . The SPU 71 has a function of decoding audio data, a function of reproducing the waveform data stored in the sound buffer 72 directly or after modulating the waveform, etc. The music sounds , the effective sounds , etc. generated by the SPU 71 are output from the speaker 32 through the audio output terminal.

Further, the optical disc controller 80 is equipped with an optical disc device 81, a decoder 82, a buffer 83 and a sub CPU 84 connected to the decoder 82.

The optical disc device 81 reproduces recording signals (the application program, the audio waveform data, etc.) from an optical disc mounted in the disc mount portion 3, and the decoder 82 decodes a reproduction signal with an error correction code (ECC), for example. Data from the optical disc device 81 is temporarily stored in the buffer 83, thereby increasing the speed of the data read-out from the optical disc.

A communication control system 90 is equipped with a communication controller 91 connected to the slot portions 7A, 7B described above. The communication controller 91 controls the communications between the device mounted in the memory card connection portion 8 (the memory card 10, the portable electronic equipment or the like) and the CPU 51 and the communications between the operating device 20 mounted in the controller connection portion 9 and the CPU 51. When it is necessary to save the setting data of the video game being executed or the like, the communication controller 91 writes the data into the memory contained in the memory card 26 or the portable electronic equipment connected to the memory card portion 8 under the control of the CPU 51.

As shown in Fig. 13, the operating device 20 connected to the control connection portion 9 has plural keys 21A, 21B, 22A, 22B, 22C, 22D, 23 for accepting the operation of the game player. In accordance with the instruction from the communication controller 91, the operating device 20 transmits the status of these keys. The communication controller 91 transmits the status of the keys of the operating device 20 to CPU 51. Accordingly, the instructions from the game player are input to the CPU 51, and the CPU 51 performs the processing corresponding to the instructions from the game player on the basis of the game program being executed.

In the foregoing description, an embodiment of the hardware construction which can implement the functional construction of Fig. 2 is shown. However, the hardware construction which can implement the present invention is not limited to the above embodiment. For example, the present invention may be broadly applied to a construction containing an entertainment system (containing an information processing unit) which can execute various application program games which are not limited to TV games.

## Claims

1. A character display method for making an entertainment apparatus perform the display processing of varying the facial expression of a character displayed on a display screen from a first facial expression to a second facial expression, comprising:
a read step of reading image data of the first facial expression in which plural control points are set, image data of the second facial expression in which plural control points are set, and image data of a third facial expression used when the facial expression of the character is varied;
a first setting step of setting the same number of control points as those of the image data of the first facial expression to the image data of the third facial expression;
a first morphing step of generating image data of a sequence of facial expressions appearing between the image data of the first facial expression and the image data of the third facial expression on the basis of the control points of the image data of the first facial expression and the control points of the image data of the third facial expression after the first setting processing;
a second setting step of newly setting the same number of control points as those of the image data of the second facial expression to the image data of the third facial expression after the first morphing step; and
a second morphing step of generating the image data of a sequence of facial expressions appearing between the image data of the third facial expression and the image data of the second facial expression on the basis of the control points of the image data of the third facial expression and the control points of the image data of the second facial expression after the second setting processing.

2. A character display method as claimed in claim 1, further comprising:
a step of making the entertainment system hold first information indicating the current facial expression of the character;
a step of making the entertainment system read second information indicating the facial expression of the character after an action on the character occurs;
a step of making the entertainment system execute the first setting step, the first morphing step, the second setting step and the second morphing step, while setting the facial expression indicated by the first information as the first facial expression and the facial expression indicated by the second information as the second facial expression, if the facial expression indicated by the first information is different from the facial expression indicated by the second information when the action on the character occurs.

3. An information recording medium having a program recorded therein, the program enabling a program-executable system to execute the processing of varying the facial expression of a character displayed on a display screen from a first facial expression to a second facial expression, the recording medium recording therein: image data of the first facial expression in which plural control points are set, image data of the second facial expression in which plural control points are set and image data of a third facial expression used when the facial expression of the character is varied, wherein
the program comprises, as processing to be executed by the system:
processing of reading the image data of the first facial expression, the image data of the second facial expression and the image data of the third facial expression;
first setting processing of setting the same number of control points as those of the image data of the first facial expression to the image data of the third facial expression;
first morphing processing of generating image data of a sequence of facial expressions appearing between the image data of the first facial expression and the image data of the third facial expression on the basis of the control points of the image data of the first facial expression and the control points of the image data of the third facial expression after the first setting step;
second setting processing of newly setting the same number of control points as those of the image data of the second facial expression to the image data of the third facial expression after the first morphing processing; and
second morphing processing of generating the image data of a sequence of facial expressions appearing between the image data of the third facial expression and the image data of the second facial expression on the basis of the control points of the image data of the third facial expression and the control points of the image data of the second facial expression after the second setting processing is executed.

4. A recording medium as claimed in claim 3, storing therein second information indicating the facial expression of the character after an action on the character occurs, the program comprising:
processing of making the system hold first information indicating the current facial expression of the character, and
processing of making the system execute the first setting processing, the first morphing processing, the second setting processing and the second morphing processing, while setting the facial expression indicated by the first information as the first facial expression and the facial expression indicated by the second information as the second facial expression, if the facial expression indicated by the first information is different from the facial expression indicated by the second information when the action on the character occurs.

5. An entertainment system for providing with a video game in which characters are displayed, comprising:
storage means for storing image data of plural facial expressions each containing control points associated with plural sites for every character, and also storing the reference image data of a facial expression serving as a reference when the facial expression of the character is varied; and
executing means which allocates the same number of control points as control points allocated to the image data before the variation to the reference image data, executing morphing processing of setting the image data before the variation and the reference image data as the first frame and the last frame respectively and then generating a sequence of frames between the first frame and the last frame on the basis of the control points, thereby obtaining and animated image data of scene in which the facial expression is varied from the first frame to the last frame, allocating to the reference image data control points whose number is equal to that of control points allocated to image data after the variation, and executing morphing processing of generating a sequence of frames from the first frame to the last frame on the basis of the control points, while newly setting the reference image data and the image data after the variation as the first frame and the last frame respectively, thereby obtaining animated image data of scene in which the facial expression is varied from the first frame to the last frame.

6. An entertainment system as claimed in claim 5, wherein the storage means stores information indicating the current facial expression, and stores information indicating a facial expression in association with each action on the character, and when an action is made on the character, the executing means varies the facial expression of the character from the current facial expression to the facial expression corresponding to the action if the former facial expression is different from the latter facial expression.

7. A program for making a program-executable system to execute processing of varying facial expression of a character displayed on a display screen from a first facial expression to a second facial expression, the program comprising, as processing to be executed by the system:
processing of reading image data of the first facial expression in which plural control points are set, image data of the second facial expression in which plural control points are set, and image data of a third facial expression used when the facial expression of the character is varied;
first setting processing of setting the same number of control points as those of the image data of the first facial expression to the image data of the third facial expression;
first morphing processing of generating image data of a sequence of facial expressions appearing between the image data of the first facial expression and the image data of the third facial expression on the basis of the control points of the image data of the first facial expression and the control points of the image data of the third facial information after the first setting processing is executed;
second setting processing of newly setting the same number of control points as those of the image data of the second facial expression to the image data of the third facial expression after the first morphing processing is executed; and
second morphing processing of generating image data of a sequence of facial expressions appearing between the image data of the third facial expression and the image data of the second facial expression on the basis of the control points of the image data of the third facial expression and the control points of the image data of the second facial expression after the second setting processing is executed.

8. A program as claimed in claim 7, further comprising, as the processing to be executed by the system:
processing of holding first information indicating the current facial expression of the character; and
processing of reading second information indicating the facial expression of the character after an action on the character occurs;
wherein if the facial expression indicated by the first information is different from the facial expression indicated by the second information when the action on the character occurs , the facial expression indicated by the first information is set as the first facial expression and the facial expression indicated by the second information is set as the second facial expression, and makes the system execute the first setting processing, the first morphing processing, the second setting processing and the second morphing processing.

9. A program for enabling a program-executable system to execute processing of varying shape of a pattern displayed on a display screen from a first shape to a second shape, comprising, as processing to be executed by the system:
read processing of reading image data representing the pattern having the first shape in which plural control points are set, image data representing the pattern having the second shape in which plural control points are set, and image data representing the pattern having a third shape used when the shape of the pattern is varied;
first setting processing of setting the same number of control points as those of the image data of the pattern having the first shape to the image data of the pattern having the third shape;
first morphing processing of generating image data of a sequence of pattern shapes appearing between the image data of the pattern having the first shape and the image data of the pattern having the third shape on the basis of the control points of the image data of the pattern having the first shape and the control points of the image data of the pattern having the third shape after the first setting processing is executed;
second setting processing of newly setting the same number of control points as those of the image data of the pattern having the second shape to the image data of the pattern having the third shape after the first morphing processing is executed; and
second morphing processing of generating image data of a sequence of pattern shapes appearing between the image data of the pattern having the third shape and the image data of the pattern having the second shape on the basis of the control points of the image data of the pattern having the third shape and the control points of the image data of the pattern having the second shape after the second setting processing is executed.

10. A program as claimed in claim 9, further comprising, as the processing to be executed by the system:
processing of holding first information indicating the current shape of the pattern on the display screen; and
processing of reading second information indicating the shape after the variation of the pattern;
wherein if the shape indicated by the first information is different from the shape indicated by the second information when an event providing a start timing to vary the shape of the pattern occurs, the shape indicated by the first information is set as the first shape,.the shape indicated by the second information is set as the second shape, and makes the system execute the first setting processing, the first morphing processing, the second setting processing and the second morphing processing.

11. A recording medium having a program recorded therein, the program making a program-executable system execute processing of varying the shape of a pattern displayed on a display screen from a first shape to a second shape, the recording medium recording therein; image data representing the pattern having the first shape in which plural control points are set, image data representing the pattern having the second shape in which plural control points are set and image data representing the pattern having a third shape used when the shape of the pattern is varied, wherein
the program comprises, as the processing to be executed by the system:
read processing of reading the image data of the pattern having the first shape, the image data of the pattern having the second shape and the image data of the pattern having the third shape;
first setting processing of setting the same number of control points as those of the image data of the pattern having the first shape to the image data of the pattern having the third shape;
first morphing processing of generating image data of a sequence of pattern shapes appearing between the image data of the pattern having the first shape and the image data of the pattern having the third shape on the basis of the control points of the image data of the pattern having the first shape and the control points of the image data of the pattern having the third shape after the first setting processing is executed;
second setting processing of newly setting the same number of control points as those of the image data of the pattern having the second shape to the image data of the pattern having the third shape after the first morphing processing is executed; and
second morphing processing of generating image data of a sequence of pattern shapes appearing between the image data of the pattern having the third shape and the image data of the pattern having the second shape on the basis of the control points of the image data of the pattern having the third shape and the control points of the image data of the pattern having the second shape after the second setting processing is executed.

12. A recording medium as claimed in claim 11, which stores therein second information indicating the shape into which the pattern is varied, the program further comprising:
processing of making the system hold first information representing the current shape of the pattern on the display screen; and
processing of executing the first setting processing, the first morphing processing, the second setting processing and the second morphing processing, while setting the shape indicated by the first information as the first shape and the shape indicated by the second information as the second shape, if the shape indicated by the first information is different from the shape indicated by the second information when an event providing a start timing to vary the shape of the pattern occurs .

13. An entertainment system for displaying a pattern on a display screen, comprising:
storage means which stores image data representing the pattern having a first shape to which plural control points are set, image data representing the pattern having a second shape in which plural control points are set, and image data representing the pattern having a third shape used when the shape of the pattern on the display screen is varied; and
executing means for setting the same number of control points as those of the image data of the pattern having the first shape to the image data of the pattern having the third shape, generating image data of a sequence of pattern shapes appearing between the image data of the pattern having the first shape and the image data of the pattern having the third pattern on the basis of the control points of the image data of the pattern having the first shape and the control points of the image data of the pattern having the third shape, newly setting the same number of control points as those of the image data of the pattern having the second shape to the image data of the pattern having the third shape, and then generating image data of a sequence of pattern shapes appearing between the image data of the pattern having the third shape and the image data of the pattern having the second shape on the basis of the control points of the image data of the pattern having the third shape and the control points of the image data of the pattern having the second shape.

14. An entertainment system as claimed in claim 13, wherein the storing means stores first information representing the current shape of the pattern on the display screen, and second information representing the shape into which the pattern is varied, and
the executing means, while setting the shape indicated by the first information and the shape indicated by the second information as the first shape and the second shape respectively, executes the first setting processing, the first morphing processing, the second setting processing and the second morphing processing, if the shape indicated by the first information is different from the shape indicated by the second information when an event providing a start timing to vary the shape of the pattern occurs.

15. A pattern display method for making an entertainment system execute processing to vary the shape of a pattern displayed on a display screen from a first shape to a second shape, comprising:
a read step of reading image data representing the pattern having the first shape in which plural control points are set, image data representing the pattern having the second shape in which plural control points are set, and image data representing the pattern having a third shape used when the shape of the pattern on the display screen is varied;
a first setting step of setting the same number of control points as those of the image data of the pattern having the first shape to the image data of the pattern having the third shape;
a first morphing step of generating image data of a sequence of pattern shapes appearing between the image data of the pattern having the first shape and the image data of the pattern having the third shape on the basis of the control points of the image data of the pattern having the first shape and the control points of the image data of the pattern having the third shape after the first setting step is executed;
a second setting step of newly setting the same number of control points as those of the image data of the pattern having the second shape to the image data of the pattern having the third shape after the first morphing step is executed; and
a second morphing step of generating image data of a sequence of pattern shapes appearing between the image data of the pattern having the third shape and the image data of the pattern having the second shape on the basis of the control points of the image data of the pattern having the third shape and the control points of the image data of the pattern having the second shape after the second setting processing is executed.

16. A pattern display method as claimed in claim 15, further comprising:
a step of making the entertainment system hold first information representing the current shape of the pattern on the display screen;
a step of making the entertainment system read second information representing the shape of the pattern into which the pattern is varied; and
a step of making the entertainment system carry out the first setting processing, the first morphing processing, the second setting processing and the second morphing processing while setting the shape indicated by the first information as the first shape and the shape indicated by the second information as the second shape, if the shape indicated by the first information is different from the shape indicated by the second information when an event providing a start timing to vary the shape of the pattern occurs.
